# EUROPÄISCHE PATENTSCHRIFT

(11) **EP 2 338 923 B1**
(45) Veröffentlichungstag und Bekanntmachung des Hinweises auf die Patenterteilung: **18.10.2017**
(21) Anmeldenummer: 09016042.5
(22) Anmeldetag: 24.12.2009
(51) Int. Cl.: C08G 18/32, C08G 18/38, C08G 18/42, C08G 18/76, C08G 18/12, A01N 47/44

(54) **Polyurethan mit einem bioziden Polyharnstoff als Comonomer**
Polyurethane with a biocidal polyuric material as comonomer
Polyuréthane doté d'une polyurée biocide en tant que comonomère

(43) Veröffentlichungstag der Anmeldung: 29.06.2011
(73) Patentinhaber: Oberwalder, Sebastian, 81371 München (DE); Oberwalder, Wolf, 5020 Salzburg (AT); Schark, Christopher, 5071 Wals (AT)
(72) Erfinder: Oberwalder, Sebastian, 81371 München (DE); Oberwalder, Wolf, 5020 Salzburg (AT)
(74) Vertreter: Weickmann & Weickmann PartmbB

(56) Entgegenhaltungen:
- EP-A- 2 000 031
- KR-A- 20050 034 017
- LANGBECK LUIS EDUARDO A: "Cleansing bath sponge incorporating a bactericide or fungicide in polyurethane foam" CAPLUS HOST- CAPLUS, 7. August 2001 (2001-08-07), XP002445977

## Beschreibung

Die vorliegende Erfindung betrifft ein Polyurethan mit einem bioziden Polyharnstoff als Comonomer, einen Gegenstand aus diesem Polyurethan sowie dessen Verwendung.

Polyurethan wird bekanntermaßen in einer Polyadditionsreaktion aus Diolen bzw. Polyolen und Diisocyanaten hergestellt. Je nach Wahl der verwendeten Edukte, speziell der Polyole, lassen sich die mechanischen Eigenschaften des Polyurethans von hart und spröde bis weich und elastisch variieren. Aufgrund dieser hohen Varianz wird Polyurethan für eine Vielzahl von verschiedenen Anwendungen eingesetzt, die sich von Hart- und Weichschäumen über Lacke und Beschichtungen bis zu Gießharzen und Poliermittel erstreckt.

Speziell im medizinischen Bereich wird nach einem Material gesucht, dass neben einem breiten Anwendungsbereich zusätzlich biozid ist, also Mikroorganismen wie Bakterien, Pilze oder Viren abtötet.

Da im Wesentlichen die späteren Eigenschaften durch die Polyolkomponente bestimmt werden, kommen in der Praxis überwiegend folgende Diisocyanatkomponenten wie 1,6-Diisocyanato-hexan (HDI), 1-Isocyanato-3-isocyanatomethyl-3,5,5-trimethyl-cyclohexan (IPDI), 1,5-Diisocyanato-naphtalin (NDI), Diisocyanato-Toluol (TDI), 4,4'-Diisocyanato-diphenylmethan (MDI), polymeres 4,4'-Diisocyanato-diphenylmethan (PMDI) und 1-Isocyanato-4-[(4-isocyanatocyclohexyl)methyl]cyclohexan (HMDI) zum Einsatz.

Polyharnstoffe werden aus einer Aminkomponente und einem Diisocyanat polymerisiert und finden insbesondere Anwendung als Klebstoffe im Bereich Holz und Papier, Schaumstoffe, sowie als Beschichtungsmaterial. Aufgrund ihrer Diisocyanatkomponente sind Polyharnstoffe auch als Comonomer in Polyurethanen denkbar.

Als Aminkomponente in Polyharnstoffen sind Guanidinium-Verbindungen oder polymeren Guanidine denkbar.

Seit langem bekannte Vertreter der Stoffgruppe der polymeren Guanidine sind vor allem Poly-(hexamethylenguanidiniumchlorid) u.a. beschrieben in US-PS 2,325,586 und unter den Handelsnamen "Poly-Guanidinium-Chlorid" auf dem Markt, sowie Poly-(hexamethylenbiguanidinchlorid), das unter den Handelsnamen "Vantocil", "Cosmocil" und "Poly-Hexamethylen-Biguanidin" vertrieben wird.

Daneben ist eine Reihe von weiteren polymeren Guanidiniumchloriden bekannt, welche unter Verwendung anderer Di- und Polyaminen hergestellt werden können, wie unverzweigten C₆ - C₁₂ Alkylenaminen (EP 0 439 698, EP 0 439 699) bzw. einer Mischung unterschiedlicher Amine wie etwa Hexamethylendiamin und diversen Oxyalkylen-Diaminen bzw. Oxypropylen-Diaminen (WO 01/85676).

Neben der Verwendung von unterschiedlichen Di- und Polyaminen bzw. unterschiedlichen Kombinationen von Di- und Polyaminen zur Polymerisation von Guanidinen und Biguanidinen sind auch Polymere von anderen Guanidinsalzen als Guanidiniumchlorid bekannt, insbesondere Guanidiniumphosphat, Guanidiniumcarbonat und Guanidiniumhydroxid. Diese anderen Guanidinsalze können - ebenso wie Guanidiniumchlorid - unter Verwendung diverser Di- und Polyamine wie z.B. HMDA, Triethylenglykoldiamin und Polyoxyalkylendiaminen polymerisiert werden (WO 01/85676, WO 2004/052961 u. WO 2008/080184).

Für die beschriebenen bekannten polymeren Guanidine bzw. polymeren Biguanidine existiert eine Vielzahl von bekannten Anwendungen, wie insbesondere deren Einsatz als Biozide, einschließlich Fungizide und Antibiotika (EP 0 439 698; EP 0 439 699; WO 99/54291; WO 01/85676; AT 2156/2006) sowie die Anwendung als Zytostatika (AT 2004/000023, EP 1 734 064). Neben dem unmittelbaren Einsatz dieser Verbindungen für die genannten Zwecke ist teilweise auch deren Einsatz unter Verwendung anderer Substanzen als physikalische Lösungs- bzw. Trägermittel bekannt. Schließlich sind physikalische Vermischungen von polymeren (Bi-)Guanidinen mit anderen Substanzen zur Desinfektion dieser Substanzen bekannt.

Bekannte chemische Weiterverarbeitungen der oben beschriebenen polymeren Guanidine beschränken sich auf den Austausch der Gegenionen der polymeren Guanidine, z.B. die Umwandlung von Poly-Guanidinium-Chlorid) in Poly-Guanidinium-Hydroxid (WO 2008/080184).

Der Verwendung von Guanidinium-Verbindungen als Aminkomponente bei der Polymerisation von Polyharnstoff steht entgegen, dass bei Raumtemperatur (ca. 20°C) in der Regel Guanidium- und Diisocyanat-Verbindungen in unterschiedlichen Aggregatzuständen vorliegen. Gleiches gilt für erhöhte Reaktionstemperaturen. So liegt der Schmelzpunkt von Guanidiniumchlorid bei >185 °C, während einzelne Isocyanate bei dieser Temperatur bereits ihren Siedepunkt überschritten haben. Des Weiteren entstehen beim Schmelzen von Guanidinen unerwünschte Nebenprodukte (z.B. gasförmige Salzsäure bei Guanidiniumchlorid). Überdies würde die bekannte Diisocyanat-Amin Reaktion bei derartig hohen Reaktionstemperaturen von über 185 °C extrem schnell und somit nur sehr schwer kontrollierbar ablaufen. Diese Problematiken ändern sich auch bei Anlegen eines entsprechenden Überdrucks nur geringfügig, da dadurch der Schmelzpunkt der Guanidine nicht erniedrigt werden kann. Lediglich die Siedepunkte der Diisocyanate können auf diesem Weg beeinflusst werden. Die Verwendung von Lösungsmitteln für die eingesetzten Guanidine zur Durchführung der Reaktion unter Normaltemperatur gestaltet sich ebenfalls schwierig, da nahezu alle Lösungsmittel für Guanidine gut bis sehr gut mit Diisocyanaten reagieren, und somit die gewünschte Reaktion zwischen den Guanidinen und den Diisocyanaten zumindest beeinflussen. Dies gilt insbesondere für Wasser, welches aufgrund der Abspaltung von CO₂ bei der Reaktion mit Diisocyanaten zu einem erheblichen Aufschäumen des Reaktionsgemisches sowie zu einer deutlichen Veränderung desselben führt. Nicht mit Diisocyanaten reagierende Lösungsmittel, wie z.B. Toluol hingegen sind unter Normaltemperatur in der Praxis zur Lösung der meisten Guanidinsalze ungeeignet.

Die KR 20050034017 A beschreibt Polyurethane mit bioziden Eigenschaften, welche aus der Umsetzung von Polyhexamethylenguanidinphosphat mit einer 1:1-Mischung von Polyethylenglykol als Polyol und Diphenymethandiisocyanat erhalten werden.

Es besteht die Aufgabe, die genannten Widerstände zu überwinden und neue Polyurethane herzustellen, die biozide Eigenschaften aufweisen.

Die vorliegende Erfindung betrifft daher ein Polyurethan, das einen Polyharnstoff mit mindestens zwei endständigen Isocyanatgruppen aus einer Guanidinium-Verbindung der Formel (I) 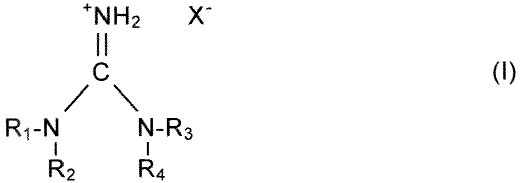 wobei R₁, R₂, R₃, R₄ = unabhängig voneinander H, [-C(=⁺NH₂)-NHR₅ + X⁻],
oder ein organischer Rest,
R₅ = H oder ein organischer Rest und
X- = Anion;
und einer Diisocyanat-Verbindung der Formel (II)

O=C=N-R₆-N=C=O (II)

wobei R₆ = organischer Rest, der 1-40 Kohlenstoffatome umfasst, als Comonomer enthält, wobei der Polyharnstoff im Polyurethan in einer Menge von 20 bis 65 Gew.-% vorhanden ist.

Es wurde überraschend gefunden, dass sich der Polyharnstoff mit mindestens zwei endständigen Isocyanatgruppen aus der Guanidinium-Verbindung der Formel (I) und der Diisocyanat-Verbindung der Formel (II) gut mit einer Polyolkomponente und gegebenfalls einer weiteren Diisocyanatkomponente zu einem Polyurethan polymerisieren lässt. Völlig überraschend weisen die neuartigen Polyurethane zudem vergleichbare biozide Eigenschaften wie polymere Guanidine auf.

Da nach den bekannten wissenschaftlichen Theorien zur Wirkweise der polymeren Guanidine diese vor allem dadurch wirken, dass sie sich auf der Oberfläche von Bakterien, Viren und Pilzen anlagern und diese durch ihre starke Ladung inaktivieren (McDonnell G., Denver Russell A., Antiseptics and Disinfectants: Activity, Action, and Resistance, Clinical Microbiology Reviews, Vol. 12, No. 1 (1999), p. 147-179, Gilbert P. et al., Barrier properties of the Gram-negative cell envelope towards high molecular weight polyhexamethylene biguanides, J. Appl. Bacteriol. 69 (1990) p.585-592 und Ikeda T. et al., Interaction of a polymeric biguanide with phospholipid membranes, Biochim. Biophys. Acta 769 (1984) p. 57-66), wäre durch eine feste Einbindung der polymeren Guanidine in längerkettige bzw. langkettige Moleküle, welche eine solche Anlagerung nahezu ausschließen, eine Abnahme, wenn nicht gar völlige Aufhebung der bioziden Wirkung der Guanidinium-Verbindung in den erfindungsgemäßen Polyurethane zu erwarten, vergleichbar mit dem völligen Verschwinden der stark bioziden Wirkung von Isocyanaten durch deren Reaktion mit Aminen zu Polyharnstoffen.

Als Comonomer wird in diesem Zusammenhang eine Komponente bezeichnet, die in der Polymerisationsreaktion in die Polymerkette, in diesem Fall des Polyurethans, eingebaut wird.

Als Diol- oder Polyolkomponente des Polyurethans kommen alle für diesen Zweck bekannten Diole und Polyole sowie deren Mischung in Betracht.

In einer möglichen Ausführungsform umfasst das Polyurethan lediglich den Polyharnstoff mit mindestens zwei endständigen Isocyanatgruppen aus der Guanidinium-Verbindung der Formel (I) und der Diisocyanat-Verbindung der Formel (II) als Diisocyanatkomponente.

In dieser Ausführungsform ist der Polyharnstoff im Polyurethan in einer Menge von 20 bis 65 Gew.-%, vorzugsweise von 30 bis 60 Gew.-% vorhanden.

In einer weiteren möglichen Ausführungsform umfasst das Polyurethan neben dem Polyharnstoff mit mindestens zwei endständigen Isocyanatgruppen aus der Guanidinium-Verbindung der Formel (I) und der Diisocyanat-Verbindung der Formel (II) ein weiteres Diisocyanat als Diisocyanatkomponente.

Hierbei ist das weitere Diisocyanat vorzugsweise in einem größeren Molanteil als der Polyharnstoff in das Polyurethan einpolymerisiert.

In dieser Ausführungsform ist der Polyharnstoff im Polyurethan in einer Menge von bevorzugt 0,01 bis 15 Gew.-%, stärker bevorzugt 0,01 bis 10 Gew.-%, noch stärker bevorzugt 0,02 bis 5 Gew.-%, am stärksten bevorzugt 0,05 bis 2,5 Gew.-% vorhanden.

Als weiteres Diisocyanat kommt hierbei insbesondere 1,6-Diisocyanato-hexan (HDI), 1-Isocyanato-3-isocyanatomethyl-3,5,5-trimethyl-cyclohexan (IPDI), 1,4-Diisocyanato-benzen (PPDI), 1,5-Diisocyanato-naphtalin (NDI), 4,4'-Diisocyanato-3,3'-dimethyl-1,1'-biphenyl (TODI), Diisocyanato-Toluol (TDI), 4,4'-Diisocyanato-diphenylmethan (MDI), 1-Isocyanato-4-[(4-isocyanatocyclohexyl)methyl]cyclohexan (HMDI) und polymeres 4,4'-Diisocyanato-diphenylmethan (PMDI) oder deren Mischung in Betracht.

Der Polyharnstoff gemäß der vorliegenden Erfindung weist vorzugsweise die folgende Struktur auf: 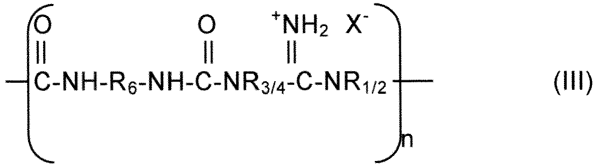 n stellt dabei die Kettenlänge des Polyharnstoffs dar. Von Interesse ist hierbei speziell die Anzahl der Guanidinium-Verbindungen im Polyharnstoff.

Die Anzahl n der Guanidinium-Verbindungen im Polyharnstoff kann 2-100 betragen, bevorzugt 2-50, stärker bevorzugt 2-20.

Es ist bevorzugt, dass die mittlere Molmasse des Polyharnstoffs mindestens 250 g/mol, stärker bevorzugt mindestens 400 g/mol beträgt. Die obere Grenze der mittleren Molmasse des Polyharnstoffs beträgt üblicherweise höchstens 5000 g/mol, bevorzugt 3500 g/mol, am stärksten bevorzugt 2500 g/mol.

Das molekulare Verhältnis der Guanidinium-Verbindung zu der Diisocyanat-Verbindung im Polyharnstoff liegt bevorzugt im Bereich von 10 mol : 1 mol bis 1 mol : 10 mol, stärker bevorzugt im Bereich von 5 mol : 1 mol bis 1 mol : 5 mol, an stärksten bevorzugt im Bereich von 4 mol : 1 mol bis 1 mol : 4 mol. Der Einbau eines höheren Molanteils des Guanidinium-Verbindung auf der einen Seite oder der Diisocyanat-Verbindung auf der anderen Seite während der Polymerisation führt zu modifizierten Eigenschaften des resultierenden Polyharnstoffs. So lassen sich die endständigen funktionellen Gruppen des Polyharnstoffs über das molekulare Verhältnis der Edukte steuern. Bei molekularem Überschuss der Guanidinium-Verbindung ist ein Polyharnstoff mit erhöhtem Anteil an endständigen Aminogruppen zu erwarten, während bei molekularem Überschuss der Diisocyanat-Verbindung ein Polyharnstoff mit erhöhtem Anteil an endständigen Isocyanat- und/oder Isothiocyanatgruppen erwartet wird.

Das erfindungsgemäße Polyurethan enthält neben Polyharnstoff eine Diisocyanat-Verbindung der Formel (II).

Eine Diisocyanat-Verbindung kann hierbei aus einer einzigen Diisocyanat-Verbindung oder aus mehreren verschiedenen Diisocyanat-Verbindungen bestehen. "Verschieden" bedeutet hierbei, dass sich der Rest R₆ der Diisocyanat-Verbindung in mindestens einem Atom unterscheidet.

Die Diisocyanat-Verbindung aus Formel (II) enthält einen organischen Rest R₆, der 1-40 Kohlenstoffatome umfasst. Es ist bevorzugt, dass der organische Rest R₆ ein aliphatischer oder aromatischer Kohlenwasserstoffrest mit 1-40 Kohlenstoffatomen, stark bevorzugt mit 4-20 Kohlenstoffatomen und am stärksten bevorzugt mit 6-16 Kohlenstoffatomen ist.

Besonders bevorzugte Diisocyanat-Verbindungen sind 1,6-Diisocyanato-hexan (HDI), 1-Isocyanato-3-isocyanatomethyl-3,5,5-trimethyl-cyclohexan (IPDI), 1,4-Diisocyanato-benzen (PPDI), 1,5-Diisocyanato-naphtalin (NDI), 4,4'-Diisocyanato-3,3'-dimethyl-1,1'-biphenyl (TODI), Diisocyanato-Toluol (TDI), 4,4'-Diisocyanato-diphenylmethan (MDI) und 1-Isocyanato-4-[(4-isocyanatocyclohexyl)methyl]cyclohexan (HMDI).

Der Polyharnstoff enthält eine Guanidinium-Verbindung. Dabei kann der Polyharnstoff entweder ein Guanidinsalz, ein Biguanidinsalz, ein Guanidiniumderivat mit den organischen Resten R₁, R₂, R₃ und/oder R₄ oder ein Biguanidiniumderivat mit den organischen Resten R₁, R₂, R₃, R₄ und/oder R₅ enthalten.

In einer bevorzugten Ausführungsform enthält keiner der Reste R₁, R₂, R₃ und/oder R₄ der Guanidinium-Verbindung nach Formel (I) einen organischen Rest.

In einer weiteren bevorzugten Ausführungsform enthält mindestens einer der Reste R₁, R₂, R₃ und/oder R₄ der Guanidinium-Verbindung nach Formel (I) einen organischen Rest.

In einer weiteren bevorzugten Ausführungsform enthalten mindestens zwei der Reste R₁, R₂, R₃ und/oder R₄ der Guanidinium-Verbindung nach Formel (I) einen organischen Rest, die gleich oder verschieden voneinander sein können.

In einer weiteren bevorzugten Ausführungsform enthalten mindestens drei der Reste R₁, R₂, R₃ und/oder R₄ der Guanidinium-Verbindung nach Formel (I) einen organischen Rest, die gleich oder verschieden voneinander sein können.

In einer weiteren bevorzugten Ausführungsform enthalten alle vier Reste R₁, R₂, R₃ und/oder R₄ der Guanidinium-Verbindung nach Formel (I) einen organischen Rest, die gleich oder verschieden voneinander sein können.

Eine Guanidinium-Verbindung kann hierbei aus einer einzigen Guanidinium-Verbindung oder aus mehreren verschiedenen Guanidinium-Verbindung bestehen. "Verschieden" bedeutet hierbei, dass sich mindestens einer der Reste R₁, R₂, R₃, R₄ oder eventuell R₅ der einzelnen Guanidinium-Verbindungen in mindestens einem Atom unterscheiden. "Gleich" bedeutet dagegen, dass die Reste R₁, R₂, R₃, R₄ oder eventuell R₅ der einzelnen Guanidinium-Verbindungen die gleiche Atomanzahl sowie die gleiche Struktur aufweisen.

Die Guanidinium-Verbindung liegt als Salz vor mit einem Anion X⁻, das bevorzugt ein Fluorid, Chlorid, Bromid, Iodid, Hydroxid, Acetat, Phosphat, Diphosphat, Sulfat, Sulfid, Nitrat, Thiocyanat, Carbonat, Maleat, Fumarat, Tartrat, Mesylat, Gluconat oder Toluolsulfonat ist. Besonders bevorzugt sind Chlorid, Hydroxid und Phosphat als Anion.

Für den Fall, dass es sich bei den Reste R₁, R₂, R₃, R₄ und optional R₅ in Formel (I) um organischen Reste handelt, können diese unabhängig voneinander aliphatische oder aromatische Kohlenwasserstoffreste mit 1-40 Kohlenstoffatomen, stark bevorzugt mit 4-20 Kohlenstoffatomen und am stärksten bevorzugt mit 6-16 Kohlenstoffatomen sein.

Des Weiteren können die Reste R₁, R₂, R₃, R₄ und optional R₅ Alkohole, Amine, Aldehyde, Ketone, Ether, Carbonsäuren oder Carbonsäureester mit 1-40 Kohlenstoffatomen, stark bevorzugt mit 4-20 Kohlenstoffatomen und am stärksten bevorzugt mit 6-16 Kohlenstoffatomen sein.Als Guanidinium-Verbindung kann neben einer monomeren Guanidinium-Verbindung auch eine bereits polymerisierte Polyguanidinium-Verbindung eingesetzt werden.

Die polymerisierte Polyguanidinium-Verbindung kann dabei eine Guanidinium-Verbindung enthalten, die ein Guanidinsalz, Biguanidinsalz, ein Guanidiniumderivat mit ein oder zwei verschiedenen organischen Resten, bevorzugt mit 1-40 Kohlenstoffatomen, oder ein Biguanidiniumderivat mit ein oder zwei verschiedenen organischen Resten, bevorzugt mit 1-40 Kohlenstoffatomen, ist.

Als Anion kommt vorzugsweise bevorzugt ein Fluorid, Chlorid, Bromid, Iodid, Hydroxid, Acetat, Phosphat, Diphosphat, Sulfat, Sulfid, Nitrat, Thiocyanat, Carbonat, Maleat, Fumarat, Tartrat, Mesylat, Gluconat oder Toluolsulfonat in Frage. Besonders bevorzugt sind Chlorid, Hydroxid und Phosphat.

Besonders bevorzugt wird die Guanidinium-Verbindung aus einer Gruppe bestehend aus Guanidinium-Fluorid, Guanidinium-Chlorid, Guanidinium-Bromid, Guanidinium-Iodid, Guanidinium-Hydroxid, Guanidinium-Acetat, Guanidinium-Phosphat, Guanidinium-Diphosphat, Guanidinium-Sulfat, Guanidinium-Sulfid, Guanidinium-Nitrat, Guanidinium-Thiocyanat, Guanidinium-Carbonat, Guanidinium-Maleat, Guanidinium-Fumarat, Guanidinium-Tartrat, Guanidinium-Mesylat, Guanidinium-Gluconat, Guanidinium-Toluolsulfonat, Biguanidinium-Fluorid, Biguanidinium-Chlorid, Biguanidinium-Bromid, Biguanidinium-Iodid, Biguanidinium-Hydroxid, Biguanidinium-Acetat, Biguanidinium-Phosphat, Biguanidinium-Diphosphat, Biguanidinium-Sulfat, Biguanidinium-Sulfid, Biguanidinium-Nitrat, Biguanidinium-Thiocyanat, Biguanidinium-Carbonat, Biguanidinium-Maleat, Biguanidinium-Fumarat, Biguanidinium-Tartrat, Biguanidinium-Mesylat, Biguanidinium-Gluconat oder Biguanidinium-Toluolsulfonat ausgewählt.

Als weitere Komponente enthält die Polyguanidinium-Verbindung vorzugsweise eine Aminverbindung mit mindestens 2 Amingruppen, die bevorzugt aus einer Gruppe bestehend aus Ethylendiamin, Triethylenglycoldiamin, Hexamethylendiamin, Diaminopropan, Diethyltriamin und Polyoxyalkylendiaminen ausgewählt wird. Das Polyoxyalkylendiamin ist bevorzugt eine Verbindung der allgemeinen Formel (IV):

H₂N-[(CR₇H)ₙO]ₘ-NH₂ (IV)

in welcher n und m unabhängig voneinander eine ganze Zahl zwischen 2 und 10, vorzugsweise 2 ist, und R₇ Wasserstoff oder ein Kohlenwasserstoffrest mit 1-6 Kohlenstoffatomen, vorzugsweise einem Methylenrest ist.

Die mittlere Molmasse des polymeriserten Guanidinium-Derivats oder des polymerisierten Guanidinsalzes beträgt vorzugsweise mindestens 150 g/mol, stärker bevorzugt mindestens 200 g/mol. Die obere Grenze der mittleren Molmasse des polymeriserten Guanidinium-Derivats oder des polymerisierten Guanidinsalzes beträgt üblicherweise höchstens 1000 g/mol, bevorzugt 750 g/mol, am stärksten bevorzugt 500 g/mol.

Die mittlere Molmasse des polymeriserten Biguanidinium-Derivats oder des polymerisierten Biguanidinsalzes beträgt vorzugsweise mindestens 200 g/mol, stärker bevorzugt mindestens 300 g/mol. Die obere Grenze der mittleren Molmasse des polymeriserten Biguanidinium-Derivats oder des polymerisierten Biguanidinsalzes beträgt üblicherweise höchstens 4000 g/mol, bevorzugt 3500 g/mol, am stärksten bevorzugt 3000 g/mol.

Die Polykondensation der Polyguanidinium-Verbindung kann hierbei in einem ersten Polymerisationsschritt vor der Polymerisation des Polyharnstoffs unter den bekannten Polymerisationsbedingungen oder in einem gemeinsamen Polymerisationsschritt gleichzeitig mit der Polymerisation des Polyharnstoffs erfolgen.

Neben der Guanidinium-Verbindung der Formel (I) und der Diisocyanat-Verbindung der Formel (II) kann der Polyharnstoff auch weitere Komponenten aufweisen, die in die Polyharnstoffkette einpolymerisiert werden können. Beispiele für derartige weitere Komponenten sind Di- oder Polyamine, Di- oder Polyole.

Vorzugsweise liegt der Anteil der weiteren Komponenten im Bereich von 0,01 bis 30 Gew.-%, stärker bevorzugt bei 0,05 bis 20 Gew.-%, am stärksten bevorzugt bei 0,1 bis 10 Gew.-% des Gesamtgewichts des Polyharnstoffs.

In einer weiteren Ausführungsform besteht der Polyharnstoff ausschließlich aus den Verbindungen der Formeln (I) und (II).

Zur Polymerisation des Polyharnstoffs wird die Guanidinium-Verbindung in einem Lösungsmittel verdünnt und anschließend mit der gegebenenfalls ebenfalls mit einem Lösungsmittel verdünnten Diisocyanat-Verbindung und/oder Diisothiocyanat-Verbindung vermischt.

Bei der Auswahl der Lösungsmittel für die Guanidinium-Verbindung und für die Diisocyanat-Verbindung ist zu beachten, dass zwischen dem eingesetzten Lösungsmittel und den Edukten keine oder zumindest möglichst wenig unerwünschte Nebenreaktionen stattfinden.

Als Lösungsmittel für die Guanidinium-Verbindung werden bevorzugt Alkohole oder Amine oder eine Mischung daraus verwendet. Dabei finden insbesondere einwertige oder zweiwertige Alkohole sowie primäre oder sekundäre Amine Verwendung, bevorzugt Diole, Diamine, wasserlösliche Polyester- oder Polyetherpolyole oder wasserlösliche Polyester- oder Polyetherglycole oder eine Mischung daraus. Das Mischungsverhältnis von Lösungsmittel und Guanidinium-Verbindung liegt bevorzugt im Bereich von 1 mol : 1 mol bis 5 mol : 1 mol, stärker bevorzugt im Bereich von 1,1 mol : 1 mol bis 2,5 mol : 1 mol.

Als Lösungsmittel für die Diisocyanat-Verbindung werden bevorzugt Toluol, Chlorbenzol, Dichlorbenzol, Dioctylphtalat, Benzoylchlorid oder eine Mischung daraus verwendet. Das Mischungsverhältnis von Lösungsmittel und Diisocyanat- und/oder Diisothiocyanat-Verbindung liegt bevorzugt im Bereich von 5 mol : 1 mol bis 100 mol : 1 mol, stärker bevorzugt im Bereich von 10 mol : 1 mol bis 50 mol : 1 mol.

Vorzugsweise liegt das molare Verhältnis des Lösungsmittels für die Diisocyanat-Verbindung und des Lösungsmittels für die Guanidinium-Verbindung im Bereich von 5 mol :1 mol bis 100 mol :1 mol, stärker bevorzugt im Bereich von 10 mol :1 mol bis 50 mol :1 mol.

Durch den bevorzugten Überschuss an Lösungsmittel für die Diisocyanat-Verbindung wird gewährleistet, dass die Nebenreaktionen des Lösungsmittels für die Guanidinium-Verbindung, das bevorzugt Alkohole oder Amine enthält, mit der Diisocyanat-Verbindung möglichst gering gehalten wird.

Dennoch kann es möglich sein, durch die Auswahl des Lösungsmittels für die Guanidinium-Verbindung die Eigenschaften des resultierenden Polyharnstoffs zu modifizieren. Durch Einsatz von Diaminen oder Diolen können dabei Polyharnstoffe mit großer Kettenlänge bzw. hoher mittlerer Molmasse erzielt werden, da es beim Einbau dieser Diamine oder Diole nicht zum Kettenabbruch kommt. Dagegen führt der Einbau von einwertigen Alkoholen oder primären Aminen zu Kettenabbruch und geringerer mittlerer Kettenlänge des resultierenden Polyharnstoffs. Eine geringere Molmasse des Polyharnstoffs kann bevorzugt sein, wenn z.B. eine bessere Löslichkeit des Polyharnstoffs erzielt werden soll.

Um den Polyharnstoff nach Beendigung der Polymerisation in Lösung zu halten oder dessen Weiterverarbeitung zu erleichtern, kann der Guanidinium-Verbindung und/oder der Diisocyanat-Verbindung ein weiteres Lösungsmittel vor der Polymerisation zugefügt werden. Hierzu finden bevorzugt Toluol, Chlorbenzol, Dichlorbenzol, Dioctylphtalat, Benzoylchlorid oder eine Mischung daraus Verwendung.

In einer Ausführungsform kann die Diisocyanat-Verbindung zunächst in ihrem Lösungsmittel vorgelegt werden und die in ihrem Lösungsmittel gelöste Guanidinium-Komponente zugegeben werden. In einer weiteren Ausführungsform kann die Guanidinium-Komponente zunächst in ihrem Lösungsmittel vorgelegt werden und die in ihrem Lösungsmittel gelöste Diisocyanat-Verbindung zugegeben werden. Die Geschwindigkeit der Zugabe kann in beiden Varianten im Bereich von 100 ml/min bis 1000 ml/min liegen.

Die Polymerisation findet bevorzugt in einem Temperaturbereich von 15°C - 100°C, stärker bevorzugt in einem Temperaturbereich von 20°C - 80°C statt.

In Einzelfällen kann es auch sinnvoll sein das Reaktionstempo zu verlangsamen. Hierfür kommt etwa eine Verkappung einzelner bzw. aller eingesetzten Amine bzw. Guanidine durch Ketone zu Ketiminen in Betracht. Diese Verkappungen können ggf. durch Hydrolyse beseitigt werden, bzw. erfolgt die Reaktion (sehr) verzögert spätestens durch Kontakt des Reaktionsproduktes mit normaler Luftfeuchtigkeit.

Ebenso kommt die vorübergehende Blockierung einzelner oder aller Isocyanate in Betracht. Als Blockierungsmittel hierfür sind prinzipiell alle Verbindungen, die eine phenolische OH-Gruppen tragen und, von dieser OH-Gruppe abgesehen, gegenüber Isocyanatgruppen inert sind, einsetzbar. Insbesondere kommen einwertige, C₁-C₁₈-, vorzugsweise C₆-C₁₂-alkylsubstituierte Phenole mit vorzugsweise einem Alkylsubstituenten oder Estergruppen aufweisende Phenole in Betracht. Bevorzugte Beispiele geeigneter Phenole sind Phenol, die isomeren Kresole, die isomeren Xylenole, 2-sek.-Butylphenol, 4-tert.-Butylphenol, die isomeren Nonylphenole, Dodecylphenole oder Octadecylphenole, die isomeren Hydroxybenzoesäurealkylester mit 1 bis 18, vorzugsweise 1 bis 4 Kohlenstoffatomen im Alkylrest oder beliebige Gemische von derartigen Phenolen. Die Verwendung von technischen Nonylphenol-Isomerengemischen ist besonders bevorzugt. Des Weiteren sind ggf. substituierte Pyrazole geeignete Bockierungsmittel. Dies sind z.B. Pyrazol, 3-(5)Methylpyrazol oder 3,5-Dimethylpyrazol. Die Verwendung von Pyrazol und 3,5-Dimethylpyrazol ist besonders bevorzugt. Schließlich eignen sich beispielhaft auch Butanonoxim, ε-caprolactam sowie sekundäre Monoamine wie z.B. Di-n-Butylamin.

Die Polyaddition des Polyurethans aus dem Polyharnstoff, einem Polyol und gegebenenfalls eines weiteren Diisocyanats erfolgt nach den bekannten Methoden.

Dabei kann in einer Ausführungsform der Polyharnstoff in einem ersten Schritt polymerisiert, gegebenenfalls gereinigt und anschließend in einem weiteren Schritt mit den weiteren Komponenten zum Polyurethan polymerisiert werden.

In einer weiteren Ausführungsform kann die Polymerisation des Polyharnstoffs in einem Schritt mit der Polymerisation des Polyurethans erfolgen. Hierzu werden vorzugsweise zunächst die gelöste Guanidinium-Verbindung und die gelöste Diisocyanat-Verbindung gegebenenfalls im molaren Überschuß miteinander vermischt und zu dieser Mischung das Polyol zugemischt.

Weiterhin kann das erfindungsgemäße Polyurethan modifiziert werden. So kommt die Modifikation des pH-Werts des Polyharnstoffcomonomers durch Zugabe von Säuren oder Basen oder durch lonenaustausch, insbesondere der Guanidin-Gegenionen in Betracht. Durch den - ggf. nur teilweisen - Tausch der Guanidin-Gegenionen bzw. die entsprechende Zugabe von Säuren lassen sich Gemische mit beliebigen pH Werten herstellen. So ist insbesondere durch Zugabe von Phosphorsäure zu Polyharnstoff mit Guanidinium-Hydroxid die Herstellung eines pH neutralen, gepufferten Polyharnstoffs mit Guanidinium Phosphat-, Guanidinium Hydrogenphosphat- und Guanidinium Hydroxid-Comonomeren möglich.

Eine weitere Möglichkeit zur Modifikation des Polyharnstoffcomonomers besteht darin, die Gegenionen des Polyharnstoffs durch lonenaustauschreaktion ganz oder teilweise auszutauschen. Insbesondere der Austausch von Cl⁻ Ionen gegen OH⁻ Ionen ist für Anwendungen in korrosionsanfälligen Umgebungen bzw. hinsichtlich der biologischen Abbaubarkeit und der entstehenden Abbauprodukte von entscheidendem Vorteil. Ebenso stellt Guanidinium Hydroxid ein sehr geeignetes und bevorzugtes Zwischenprodukt zur einfachen Herstellung von z.B. Poly Guanidinium Phosphat durch den (weiteren) Austausch der OH- Ionen dar. Einzelne Polyguanidinsalze lassen sich aufgrund ihres Löslichkeitsverhaltens in der Anwendungspraxis ebenfalls besser durch Polymerisation von Guanidinium-Chlorid oder Guanidinium Hydroxid und nachfolgenden lonentausch herstellen, als dies durch direkte Polymerisation der Fall wäre.

Verfahren zur Durchführung der lonentauschreaktionen sind seit langem bekannt. Zusätzlich sind Vorrichtungen zur Durchführung solcher Reaktionen wie z.B. Tauschersäulen im Handel verfügbar.

Diese Modifikationen können vor oder nach der Polymerisation des Polyurethans erfolgen.

Das Polyurethan weist überraschenderweise die biozide Wirkung der Guanidinium-Verbindung des Polyharnstoffcomonomers auf. Hierbei wird bevorzugt, dass das erfindungsgemäße Polyurethan biozid auf Mikroorganismen, vorzugsweise Bakterien, Viren, Pilze und Hefen, wirkt.

Weiterer Gegenstand der vorliegenden Erfindung ist daher die Verwendung des Polyharnstoffs als Comonomer bei der Polymerisation von Polyurethan. Der Polyharnstoff umfasst hierbei alle beschriebenen Ausführungsformen und Spezifikationen.

Ebenfalls umfasst vom der vorliegenden Erfindung ist ein Gegenstand der das erfindungsgemäße Polyurethan enthält. Das Polyurethan umfasst hierbei alle beschriebenen Ausführungsformen und Spezifikationen. Der Gegenstand kann hierbei vollständig oder teilweise aus dem erfindungsgemäßen Polyurethan bestehen.

Der Gegenstand umfasst bevorzugt alle bekannten Anwendungsgebiete des Polyurethans.

Weiterer Gegenstand der vorliegenden Erfindung ist zudem die Verwendung des erfindungsgemäßen Polyurethans zur Herstellung eines Gegenstandes.

Die Erfindung wird durch die folgenden nicht-anspruchsgemäßen Beispiele veranschaulicht. Die Erfindung ist jedoch nicht auf die Beispiele limitiert.

### Beispiele:

### 1. Herstellung eines Prepolymers mit Diphenylmethandiisocyanat und Polyharnstoff mit endständigen Isocyanaten:

In einem 1000 ml Rundkolben werden 200 g einer 20 prozentigen wässrigen Lösung eines Gemischs polymerisierter Guanidinium-Chloride (Hersteller: Shanghai Jucheng Chemical Co., CAS Nr. 57028-96-3) sowie 45 g 1,4-Butandiol (BDO) vermischt. Anschließend wird das Wasser (160 g) unter Vakuum abgedampft. Das trockene Poly-Guanidin/BDO Gemisch wird auf 80°C erwärmt und mit 640 g ebenfalls auf 80°C erwärmtem Polycaprolacton mit einem durchschnittlichen Molekulargewicht von 2000 g/mol (Hersteller: Perstorp) versetzt. Bei dieser Temperatur 30 Minuten gut, das Rühren wird fortgesetzt.

Anschließend werden 682 g Diisocyanato-diphenylmethan (Diphenylmethandiisocyanat, MDI, Molekulargewicht 250,26 g/mol) auf 42°C erwärmt und unter Rühren zugegeben. Die Temperatur wird wieder auf 80°C erhöht und für weitere 120 Minuten gehalten, das Rühren wird fortgesetzt.

Anschließend wird das Reaktionsgemisch auf Raumtemperatur abkühlen gelassen, und der NCO Gehalt titriert.
Sollwert: 9,8 - 10,2 %
Istwert bei Beispiel: 9,98 %
Der Prepolymer hat einen Anteil an polymerisierten Guanidinen von 2,926 %.

### 2. Herstellung eines Polyurethans aus dem Prepolymer des Beispiels 1

In einem 2000 ml Becherglas werden 700 g Polycaprolacton mit einem durchschnittlichen Molekulargewicht von 2000 g/mol (Hersteller: Perstorp) mit 300 g Dimethylthiotoluoldiamin (Ethacure 300, Hersteller: Albemarle, Molekulargewicht 214 g/mol) versetzt.

Eine rechteckige Aluminiumgussform wird mit einem handelsüblichen Trennmittel (AK 100 Siliconöl, Hersteller: Wacker Chemie AG) eingetrennt und auf 60°C aufgeheizt.

100 g des Prepolymers gem. Beispiel 1 werden daraufhin mit 65 g des oben beschriebenen Polyolgemischs in einem Probengefäß aus Hartplastik (500 ml Rotilabo-Probenbecher aus PTFE) für ca. 30 Sekunden mit einer geeigneten Mischvorrichtung (Laborrührwerk RW 11 basic "Lab egg" der Firma Carl Roth) durchmischt, und unverzüglich in die vorbereitete Form gegossen.

Zum vollständigen Aushärten wird die Aluminiumform daraufhin in einen auf 90 °C vorgeheizten Trockenschrank gestellt. Nach 90 Minuten entsteht ein vollständig stabiler Körper, welcher innerhalb weiterer ca. 12 Stunden völlig durchreagiert.

Nach Abschluss dieser Reaktion weist der hergestellte Körper entsprechend dem eingesetzten Polyurethan-Elastomer System folgende Eigenschaften auf:
Dichte 1,04 kg/m³
Oberflächen-Härte nach Shore D: 44, bestimmt nach DIN 53505
Weiterreißfestigkeit: 75 N/mm², bestimmt nach DIN 53507, DIN 53515
Bruchdehnung: 400 %, bestimmt nach DIN 53517
Zugfestigkeit: 40 N/mm², bestimmt nach DIN 53504
berechneter Anteil polymerisierte Guanidine: 1,77 %
Das Polyurethan besteht aus ca. 1 Gew.-% Polyharnstoff aus Beispiel 1, 60 Gew.-% Polyesterpolyolefinen sowie 39 Gew.-% Toluylendiisocyanat (TDI)

### 3. Herstellung eine Polyurethan-Prüfkörpers

Das PU-Muster aus Beispiel 2 wird zu einem ca. 20x20 mm großem und ca. 4 mm dicken Testkörper verarbeitet. Ein Vergleichstestkörper mit den gleichen Abmaßen wurde ebenfalls nach dem Verfahren des Beispiels 2 aus 60 Gew.-% Polyesterpolyolefinen sowie 40 Gew.-% Toluylendiisocyanat (TDI) hergestellt und in gleichem Maße verarbeitet.

Beide Testkörper wurden in einem zertifizierten Labor folgendem Labortest unterzogen:

### 4. Test des Biozidität auf Agarplatten

Agar- Platten wurden mit unten genannten Bakterien und Pilzkulturen beimpft. Danach wurde der gem. Beispiel 3 hergestellte zu prüfende Testkörper und ein Vergleichskörper aus einem bis auf die Einbindung der polymerisierten Guanidine identen herkömmlichen Polyurethane-Elastomer auf die beimpften Agarplatten verteilt aufgelegt. Nach verschiedenen Inkubationszeiten erfolgte die Ausmessung der Hemmhofränder.

Angaben zur Technischen Durchführung:
- Nährbodenschalen mit 140 mm Durchmesser mit 100 ml Nähragar
- Nähragar für Pilze: BRC- Agar
- Nähragar für Bakterien: CS- Agar
- Größe der Teststücke: 20x20 mm

### Prüfstämme:

- Staphylokoccus aureus
- Pseudomonas putida
- Candida albicans
- Acremonium spec.
- Aspergillus niger:

### Keimzahlen der Prüfstämme:

Die Ausgangskeimzahlen der Bakterien und Pilzkulturen betrugen ca. 1x10⁸/ml bis 5x10⁸/ml. Die Keime wurden bei einer Agar- Temperatur von ca. 40 °C in den flüssigen Agar eingemischt; danach wurde der Agar gegossen.

**Tabelle 1: Testergebnisse**

| Testkeim: | Breite des Hemmhofes [mm] | |
|---|---|---|
| | Referenzprobe PU | Testkörper |
| **Staph.aureus** | | |
| 1. Ablesung | 0 | 4-5 |
| 2. Ablesung | 0 | 4-5 |

| **Ps**. **putida** | | |
|---|---|---|
| 1. Ablesung | 0 | 1,5 |
| 2. Ablesung | 0 | 1,5 |

| **Cand**. **albicans** | | |
|---|---|---|
| 1. Ablesung | 0 | 8 |
| 2. Ablesung | 0 | 8 |

| **Acremonium** | | |
|---|---|---|
| 1. Ablesung | 0 | 4 |
| 2. Ablesung | 0 | 1,5 |

| **Aspergillus nig.** | | |
|---|---|---|
| 1. Ablesung | 0,5 | 4 |
| 2. Ablesung | 0 | 2 |

| | | |
|---|---|---|
| 1. Ablesung: nach 1. Tag 2. Ablesung: nach 10 Tagen | | |

### 5. Test auf Dauerhaftigkeit der Biozidität in Flüssigmedien

Um eine absolute Beständigkeit der Proben bei maximaler Belastung zu überprüfen, wurde ein gem. Beispiel 3 hergestellter Testkörper in 100 ml einer physiologischen Kochsalzlösung eingelegt welche mit einem Gemisch bestehend aus 7 verschiedenen Bakterienstämmen und 4 verschiedenen Pilzstämmen in einer Konzentration von 10⁸ koloniebildenden Einheiten (KBE) pro ml beimpft und anschließend bei 30°C (Schüttelinkubator) inkubiert wurden. Die beimpfte Probe wurde an 5 Tagen für 2 Minuten geschüttelt und an den beiden darauffolgenden Tagen nicht bewegt. Kontrollen zur Keimzahlbestimmung erfolgten am 1. Tag und alle 7 Tage nach der Beimpfung. Bereits nach Kontrolle Tag 1 und Kontrolle 1. Woche war die beimpfte Kochsalzlösung bakterienfrei, die Konzentration der Pilze hatte auf ca. 10³ KBE/ml abgenommen. Die bereits beimpfte Kochsalzlösung mit dem darin befindlichen Testkörper wurde noch 2 weitere Male mit demselben Gemisch, bestehend aus 10⁸ koloniebildenden Einheiten (KBE), beimpft. Auch dabei zeigte sich nach jeweils einer weiteren Woche (2./3. Woche) eine vollständige Bakterienfreiheit, sowie ein Rückgang der Pilzstämme um 3 Zehnerpotenzen.

Das in diesem Versuch und den im Folgenden aufgeführten Versuchen verwendete Gemisch aus Bakterien und Pilzen besteht aus
Bakterien: Pseudomonas putida, Pseudomonas versicolor, Pseudomonas cepacia, Pseudomonas fluorescens, Pseudomonas aeruginosa, Acinetobacter spec., Micrococcus spec.
Pilze : Candida albicans, Fusarium spec., Acremonium spec., Penicillium spec.

**Tabelle 2: Bakteriologischer Befund**

| | Koloniebildende Einheiten (KBE) / ml | | | | | | | | |
|---|---|---|---|---|---|---|---|---|---|
| | Anzahl der Impfzyklen (Wochen) | | | | | | | | |
| Muster (Labor-Nr.) | 1 Tag | 1. Wo. | 2. Wo. | 3. Wo. | 4. Wo. | 5. Wo. | 6. Wo. | 7. Wo. | 8. Wo. |
| Testkörper | 0 | 0 | 0 | 0 | -*⁾ | - | - | - | - |
| Wasser-Kontrolle | 9x10⁵ | n.d. | n.d. | n.d. | - | - | - | - | - |

| | | | | | | | | | |
|---|---|---|---|---|---|---|---|---|---|
| n.d. = nicht durchgeführt *) nach Rücksprache gestoppt | | | | | | | | | |

**Tabelle 3: Mykologischer Befund**

| | Koloniebildende Einheiten (KBE) / ml | | | | | | | | |
|---|---|---|---|---|---|---|---|---|---|
| | Anzahl der Impfzyklen (Wochen) | | | | | | | | |
| Muster (Labor-Nr.) | 1 Tag | 1. Wo. | 2. Wo. | 3. Wo. | 4. Wo. | 5. Wo. | 6. Wo. | 7. Wo. | 8. Wo. |
| Testkörper | 2x10³ | 4x10³ | 2x10³ | 2x10² | -*⁾ | - | - | - | - |
| Wasser-Kontrolle | 5x10⁶ | n.d. | n.d. | n.d. | - | - | - | - | - |

| | | | | | | | | | |
|---|---|---|---|---|---|---|---|---|---|
| n.d. = nicht durchgeführt *⁾ nach Rücksprache gestoppt | | | | | | | | | |

Anzahl der Beimpfungen pro Impfzyklus: 2 x

Als nächstes wurde der selbe Testkörper aus der Lösung entnommen, nochmals mehrfach intensiv unter Zuhilfenahme von Laborspülgeräten gereinigt und wiederum exakt demselben Belastungstest mit 7 Bakterien- und 4 Pilzstämmen unterzogen. Auch bei der Wiederholung, nach nochmaliger Reinigung, zeigten sich dieselben Testresultate einer vollständigen Bakterienfreiheit, sowie eines maßgeblichen Rückgangs der Pilzbelastung von ca. 10⁶ auf ca. 10³.

**Tabelle 4: Bakteriologischer Befund**

| | Koloniebildende Einheiten (KBE) / ml | | | | | | | | |
|---|---|---|---|---|---|---|---|---|---|
| | Anzahl der Impfzyklen (Wochen) | | | | | | | | |
| Muster (Labor-Nr.) | 1 Tag | 1. Wo. | 2. Wo. | 3. Wo. | 4. Wo. | 5. Wo. | 6. Wo. | 7. Wo. | 8. Wo. |
| Testkörper | 0 | 0 | 0 | 0 | -*⁾ | - | - | - | - |

| | | | | | | | | | |
|---|---|---|---|---|---|---|---|---|---|
| *⁾ nach Rücksprache gestoppt | | | | | | | | | |

**Tabelle 5: Mykologischer Befund**

| | Koloniebildende Einheiten (KBE) / ml | | | | | | | | |
|---|---|---|---|---|---|---|---|---|---|
| | Anzahl der Impfzyklen (Wochen) | | | | | | | | |
| Muster (Labor-Nr.) | 1 Tag | 1. Wo. | 2. Wo. | 3. Wo. | 4. Wo. | 5. Wo. | 6. Wo. | 7. Wo. | 8. Wo. |
| Testkörper | 10³ | 10³ | 9x10² | 1,5x10³ | -*⁾ | - | - | - | - |

| | | | | | | | | | |
|---|---|---|---|---|---|---|---|---|---|
| *⁾ nach Rücksprache gestoppt | | | | | | | | | |

Anzahl der Beimpfungen pro Impfzyklus: 2 x

Um in einem weiteren Versuch die absolute Beständigkeit zu demonstrieren, wurde ein neuer gem. Beispiel 3 hergestellter Testkörper mit einer Größe von 20x20 mm vor dem oben beschrieben Versuch 10 x über 20 Stunden intensiv mit einer physiologischen Kochsalzlösung gereinigt. Nach dieser intensiven Reinigung wurde der Nährlösungstest durchgeführt, wiederum mit vergleichbarem Resultat.

**Tabelle 6: Bakteriologischer Befund**

| | Koloniebildende Einheiten (KBE) / ml | | | | | | | | |
|---|---|---|---|---|---|---|---|---|---|
| | Anzahl der Impfzyklen (Wochen) | | | | | | | | |
| Muster (Labor-Nr.) | 1 Tag | 1. Wo. | 2. Wo. | 3. Wo. | 4. Wo. | 5. Wo. | 6. Wo. | 7. Wo. | 8. Wo. |
| Testkörper | 0 | 0 | -*⁾ | - | - | - | - | - | - |

| | | | | | | | | | |
|---|---|---|---|---|---|---|---|---|---|
| *⁾ nach Rücksprache gestoppt | | | | | | | | | |

**Tabelle 7: Mykologischer Befund**

| | Koloniebildende Einheiten (KBE) / ml | | | | | | | | |
|---|---|---|---|---|---|---|---|---|---|
| | Anzahl der Impfzyklen (Wochen) | | | | | | | | |
| Muster (Labor-Nr.) | 1 Tag | 1. Wo. | 2. Wo. | 3. Wo. | 4. Wo. | 5. Wo. | 6. Wo. | 7. Wo. | 8. Wo. |
| Testkörper | 8x10⁴ | 5x103 | -*⁾ | - | - | - | - | - | - |

| | | | | | | | | | |
|---|---|---|---|---|---|---|---|---|---|
| *⁾ nach Rücksprache gestoppt | | | | | | | | | |

Anzahl der Beimpfungen pro Impfzyklus: 2 x

Um in einen weiteren Versuch die Beständigkeit unter Extrembedingungen zu demonstrieren, wurde nochmals ein neuer gem. Beispiel 3 hergestellter Testkörper mit einer Größe von 20x20mm vor dem oben beschrieben Versuch in einem Laborgeschirrspüler 5x bei erhöhter Temperatur und Zugabe von Reinigungsmittel gewaschen. Nach dieser intensiven Reinigung wurde der Nährlösungstest nochmals wiederholt, wiederum mit vergleichbarem Resultat. Die Probe wurde gemäß oben erwähnten Testrichtlinien über einen weiteren Zeitraum von 5 Wochen mit wöchentlicher Kontrolle und jeweils anschließender Neubeimpfung getestet.

**Tabelle 8: Bakteriologischer Befund**

| | Koloniebildende Einheiten (KBE) / ml | | | | | | | | |
|---|---|---|---|---|---|---|---|---|---|
| | Anzahl der Impfzyklen (Wochen) | | | | | | | | |
| Muster (Labor-Nr.) | 1 Tag | 1. Wo. | 2. Wo. | 3. Wo. | 4. Wo. | 5. Wo. | 6. Wo. | 7. Wo. | 8. Wo. |
| Testkörper | 0 | 0 | 0 | 10³ | 10 | 0 | - | - | - |
| Kontrolle: ∼10⁸ | | | | | | | | | |

**Tabelle 9: Mykologischer Befund**

| | Koloniebildende Einheiten (KBE) / ml | | | | | | | | |
|---|---|---|---|---|---|---|---|---|---|
| | Anzahl der Impfzyklen (Wochen) | | | | | | | | |
| Muster (Labor-Nr.) | 1 Tag | 1. Wo. | 2. Wo. | 3. Wo. | 4. Wo. | 5. Wo. | 6. Wo. | 7. Wo. | 8. Wo. |
| Testkörper | 8x10³ | 8x10² | 8x10³ | 8x10² | 10³ | 9x10³ | - | - | - |
| Kontrolle: >10⁶ | | | | | | | | | |

Anzahl der Beimpfungen pro Impfzyklus: 5x

## Patentansprüche

1. Polyurethan, das einen Polyharnstoff mit mindestens zwei endständigen Isocyanatgruppen aus einer Guanidinium-Verbindung der Formel (I) 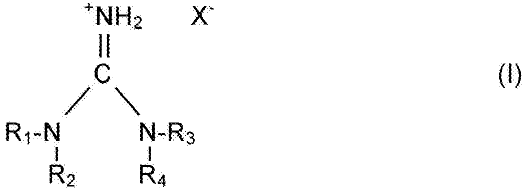 wobei R₁, R₂, R₃, R₄ = unabhängig voneinander H, [-C(=⁺NH₂)-NHR₅
+ X⁻], oder ein organischer Rest,
R₅ = H oder ein organischer Rest und
X- = Anion;
und einer Diisocyanat-Verbindung der Formel (II)
O=C=N-R₆-N=C=O (II)
wobei R₆ = organischer Rest, der 1-40 Kohlenstoffatome umfasst, als Comonomer enthält, wobei der Polyharnstoff im Polyurethan in einer Menge von 20 bis 65 Gew.-% vorhanden ist.

2. Polyurethan nach Anspruch 1, wobei der Polyharnstoff eine mittlere Molmasse von 250 bis 5000 g/mol hat.

3. Polyurethan nach einem der vorangegangenen Ansprüche, wobei die Anzahl n der Guanidinium-Verbindungen im Polyharnstoff im Bereich von 2-100 liegt.

4. Polyurethan nach einem der vorangegangenen Ansprüche, wobei das molekulare Verhältnis der Guanidinium-Verbindung zu der Diisocyanat-Verbindung im Bereich von 10 mol : 1 mol bis 1 mol : 10 mol liegt.

5. Polyurethan nach einem der vorangegangenen Ansprüche, wobei X⁻ Fluorid, Chlorid, Bromid, Iodid, Hydroxid, Acetat, Phosphat, Diphosphat, Sulfat, Sulfid, Nitrat, Thiocyanat, Carbonat, Maleat, Fumarat, Tartrat, Mesylat, Gluconat oder Toluolsulfonat ist.

6. Polyurethan nach einem der vorangegangenen Ansprüche, wobei die organischen Reste R₁, R₂, R₃, R₄, R₅ und R₆ in den Formeln (I) und (II) unabhängig voneinander aliphatische oder aromatische Kohlenwasserstoffreste mit 1-40 Kohlenstoffatomen sind.

7. Polyurethan nach einem der vorangegangenen Ansprüche, wobei die Guanidinium-Verbindung eine Polyguanidinium-Verbindung ist.

8. Polyurethan nach Anspruch 7, wobei die Polyguanidinium-Verbindung eine Aminverbindung mit mindestens 2 Amingruppen enthält.

9. Polyurethan nach Anspruch 7 oder 8, wobei die Polyguanidinium-Verbindung eine Guanidinium-Verbindung, ausgewählt aus einer Gruppe bestehend aus Guanidinium-Fluorid, Guanidinium-Chlorid, Guanidinium-Bromid, Guanidinium-Iodid, Guanidinium-Hydroxid, Guanidinium-Acetat, Guanidinium-Phosphat, Guanidinium-Diphosphat, Guanidinium-Sulfat, Guanidinium-Sulfid, Guanidinium-Nitrat, Guanidinium-Thiocyanat, Guanidinium-Carbonat, Guanidinium-Maleat, Guanidinium-Fumarat, Guanidinium-Tartrat, Guanidinium-Mesylat, Guanidinium-Gluconat, Guanidinium-Toluolsulfonat, Biguanidinium-Fluorid, Biguanidinium-Chlorid, Biguanidinium-Bromid, Biguanidinium-Iodid, Biguanidinium-Hydroxid, Biguanidinium-Acetat, Biguanidinium-Phosphat, Biguanidinium-Diphosphat, Biguanidinium-Sulfat, Biguanidinium-Sulfid, Biguanidinium-Nitrat, Biguanidinium-Thiocyanat, Biguanidinium-Carbonat, Biguanidinium-Maleat, Biguanidinium-Fumarat, Biguanidinium-Tartrat, Biguanidinium-Mesylat, Biguanidinium-Gluconat oder Biguanidinium-Toluolsulfonat enthält.

10. Polyurethan nach einem der vorangegangenen Ansprüche, das biozid auf Mikroorganismen wirkt.

11. Gegenstand, der das Polyurethan nach einem der Ansprüche 1 bis 10 enthält.

12. Verwendung des nach einem der Ansprüche 1 bis 10 eingesetzten Polyharnstoffs bei der Polymerisation von Polyurethan als Comonomer.

13. Verwendung des Polyurethans nach einem der Ansprüche 1 bis 10 zur Herstellung eines Gegenstandes.

## Claims

1. Polyurethane which contains, as a comonomer, a polyurea comprising at least two terminal isocyanate groups from the guanidinium compound of formula (I) 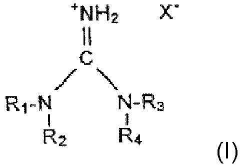 wherein
independently of one another, R₁, R₂, R₃, R₄ = H, [-C(=⁺NH₂)-NHR₅ + X⁻], or an organic functional group,
R₅ = H or an organic functional group and
X⁻ = anion;
and a diisocyanate compound of formula (II)
O=C=N-R₆-N=C=O (II)
wherein R₆ = an organic functional group that comprises 1-40 carbon atoms,
wherein the polyurea is present in the polyurethane in an amount of from 20 to 65 wt.%.

2. Polyurethane according to claim 1, wherein the polyurea has an average molar mass of from 250 to 5,000 g/mol.

3. Polyurethane according to any of the preceding claims, wherein the number n of guanidinium compounds in the polyurea is in the range of from 2 to 100.

4. Polyurethane according to any of the preceding claims, wherein the molecular ratio of the guanidinium compound to the diisocyanate compound is in the range of from 10 mol : 1 mol to 1 mol : 10 mol.

5. Polyurethane according to any of the preceding claims, wherein X- is fluoride, chloride, bromide, iodide, hydroxide, acetate, phosphate, diphosphate, sulfate, sulfide, nitrate, thiocyanate, carbonate, maleate, fumarate, tartrate, mesylate, gluconate or toluenesulfonate.

6. Polyurethane according to any of the preceding claims, wherein the organic functional groups R₁, R₂, R₃, R₄, R₅ and R₆ in formulas (I) and (I) are, independently of one another, aliphatic or aromatic hydrocarbon functional groups having 1-40 carbon atoms.

7. Polyurethane according to any of the preceding claims, wherein the guanidinium compound is a polyguanidinium compound.

8. Polyurethane according to claim 7, wherein the polyguanidinium compound contains an amine compound having at least 2 amine groups.

9. Polyurethane according to either claim 7 or claim 8, wherein the polyguanidinium compound contains a guanidinium compound selected from a group consisting of guanidinium fluoride, guanidinium chloride, guanidinium bromide, guanidinium iodide, guanidinium hydroxide, guanidinium acetate, guanidinium phosphate, guanidinium diphosphate, guanidinium sulfate, guanidinium sulfide, guanidinium nitrate, guanidinium thiocyanate, guanidinium carbonate, guanidinium maleate, guanidinium fumarate, guanidinium tartrate, guanidinium mesylate, guanidinium gluconate, guanidinium toluenesulfonate, biguanidinium fluoride, biguanidinium chloride, biguanidinium bromide, biguanidinium iodide, biguanidinium hydroxide, biguanidinium acetate, biguanidinium phosphate, biguanidinium diphosphate, biguanidinium sulfate, biguanidinium sulfide, biguanidinium nitrate, biguanidinium thiocyanate, biguanidinium carbonate, biguanidinium maleate, biguanidinium fumarate, biguanidinium tartrate, biguanidinium mesylate, biguanidinium gluconate or biguanidinium toluenesulfonate.

10. Polyurethane according to any of the preceding claims, which acts biocidally on microorganisms.

11. Item that contains the polyurethane according to any of claims 1 to 10.

12. Use of the polyurea used according to any of claims 1 to 10 as a comonomer in the polymerisation of polyurethane.

13. Use of the polyurethane according to any of claims 1 to 10 for producing an item.

## Revendications

1. Polyuréthane, comprenant une polyurée ayant au moins deux groupes terminaux isocyanate d'un composé de guanidinium avec la formule (I) 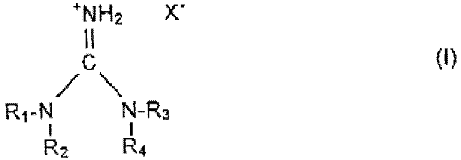 avec R₁, R₂, R₃, R₄ = indépendamment les uns des autres H, [-C(=⁺NH₂)-NHR₅+X⁻], ou un résidu organique,
R₅ = H ou un résidu organique et
X⁻ = un anion ;
et un composé diisocyanate avec la formule (II)
O=C=N-R₆-N=C=O (II)
avec
R₅ = un résidu organique, comprenant 1-40 atomes de carbone,
en tant que comonomère,
où la polyurée est présente dans le polyuréthane dans une quantité comprise entre 20 et 65 pour-cent en poids.

2. Polyuréthane selon la revendication 1,
la polyurée ayant une masse moléculaire moyenne comprise entre 250 et 5 000 g/mol.

3. Polyuréthane selon une des revendications précédentes,
le nombre n des composés de guanidinium dans la polyurée étant dans la gamme comprise entre 2-100.

4. Polyuréthane selon une des revendications précédentes,
le rapport molaire du composé de guanidinium au composé diisocyanate étant dans la gamme comprise entre 10 mol :1 mol et 1 mol : 10 mol.

5. Polyuréthane selon une des revendications précédentes,
X étant du fluorure, chlorure, bromure, iodure, hydroxyde, acétate, phosphate, diphosphate, sulfate, sulfure, nitrate, thiocyanate, carbonate, maléate, fumarate, tartrate, mésylate, gluconate ou toluène sulfonate.

6. Polyuréthane selon une des revendications précédentes,
les résidus organiques R₁, R₂, R₃, R₄, R₅ et R₆ dans les formules (I) et (II) étant indépendamment les uns des autres des résidus hydrocarbonés aliphatiques ou aromatiques comprenant 1-40 atomes de carbone.

7. Polyuréthane selon une des revendications précédentes,
le composé de guanidinium étant un composé de polyguanidinium.

8. Polyuréthane selon la revendication 7,
le composé de polyguanidinium comprenant un composé aminé avec au moins deux groupes amine.

9. Polyuréthane selon les revendications 7 ou 8,
le composé de polyguanidinium comprenant un composé de guanidinium, choisi d'un groupe comprenant : fluorure de guanidinium, chlorure de guanidinium, bromure de guanidinium, iodure de guanidinium, hydroxide de guanidinium, acétate de guanidinium, phosphate de guanidinium, diphosphate de guanidinium, sulfate de guanidinium, sulfure de guanidinium, nitrate de guanidinium, thiocyanate de guanidinium, carbonate de guanidinium, maléate de guanidinium, fumarate de guanidinium, tartrate de guanidinium, mésylate de guanidinium, gluconate de guanidinium, toluène sulfonate de guanidinium, fluorure de biguanidinium, chlorure de biguanidinium, bromure de biguanidinium, iodure de biguanidinium, hydroxyde de biguanidinium, acétate de biguanidinium, phosphate de biguanidinium, diphosphate de biguanidinium, sulfate de biguanidinium, sulfure de biguanidinium, nitrate de biguanidinium, thiocyanate de biguanidinium, carbonate de biguanidinium, maléate de biguanidinium, fumarate de biguanidinium, tartrate de biguanidinium, mésylate de biguanidinium, gluconate de biguanidinium ou toluène sulfonate de biguanidinium.

10. Polyuréthane selon une des revendications précédentes,
agissant comme biocide contre les microorganismes.

11. Objet, comprenant le polyuréthane selon une des revendications 1 à 10.

12. Utilisation de la polyurée employée selon une des revendications 1 à 10 dans la polymérsiation de polyuréthane comme comonomère.

13. Utilisation du polyuréthane selon une des revendications 1 à 10 pour produire l'objet.
